# EUROPEAN PATENT APPLICATION

(11) **EP 1 442 792 A1**
(43) Date of publication of application: **04.08.2004**
(21) Application number: 02777877.8
(22) Date of filing: 18.10.2002
(51) Int. Cl.: B01J 35/02, B01J 37/02

(54) **PHOTOCATALYTIC MATERIAL AND UTILIZATION THEREOF**

(30) Priority: 18.10.2001 JP 2001321029
(71) Applicant: NORITAKE CO., LIMITED, Nagoya-shi, Aichi 451-8501 (JP); Kobayashi, Takeshi, Nagoya-shi, Aichi 464-0096 (JP)
(72) Inventor: KOBAYASHI, Takeshi, Nagoya-shi, Aichi 464-0096 (JP); WATANABE, Hirokazu, c/o NORITAKE CO., LIMITED, Nagoya-shi, Aichi 451-8501 (JP); KATO, Shinji, c/o NORITAKE CO., LIMITED, Nagoya-shi, Aichi 451-8501 (JP); KUROBE, Hisanori, c/o NORITAKE CO., LIMITED, Nagoya-shi, Aichi 451-8501 (JP); IWATA, Misao, c/o NORITAKE CO., LIMITED, Nagoya-shi, Aichi 451-8501 (JP); KONDO, Yoichi, c/o NORITAKE CO., LIMITED, Nagoya-shi, Aichi 451-8501 (JP)
(74) Representative: Bannerman, David Gardner
(86) International application number: PCT/JP2002/010820
(87) International publication number: WO 2003/033145

(57) **Abstract**

The present invention relates to a photocatalytic material that can selectively inactivate a specific biologically harmful substance through photocatalysis, and uses thereof.

The photocatalytic material (21) provided by the present invention comprises a photocatalyst (23), and a holding substance (26) having a holding part (17) that specifically holds a specific biologically harmful substance, the holding substance (26) being disposed in a state fixed to at least a part of the surface of the photocatalyst (23). The photocatalytic material (21) is designed such that substantially all of the holding substance (26) is disposed on the surface of the photocatalyst in a form such as to be able to specifically hold a specific biologically harmful substance in the holding part (17).

## Description

### TECHNICAL FIELD

The present invention relates to a material (composition) that selectively inactivates a biologically harmful substance such as a virus, a bacterium, or a toxin through photocatalysis, a method of manufacturing the material, and a harmful substance treatment apparatus constructed using the material.

### BACKGROUND ART

To prevent contamination of biological or medical/pharmacological samples such as blood or blood preparations with organisms such as pathogenic bacteria and viruses that are biologically hazardous, or toxins or the like produced by such organisms (hereinafter these are referred to collectively as 'biologically harmful substances' or merely 'harmful substances'), treatment to inactivate such harmful substances or treatment to separate out and thus eliminate such harmful substances is carried out on these samples.

Of these treatments, treatment to eliminate harmful substances by filtration and treatment to inactivate harmful substances by heating or the like are widely carried out on samples containing biochemical raw material substances such as blood preparations. However, treatment to inactivate by heating, electrolysis or the like is undesirable, since there is a risk of denaturing not only the harmful substances such as viruses and toxins but also principal components of the sample such as proteins. Moreover, with the method of physically separating out and eliminating by filtration, it is difficult to completely eliminate harmful substances of varying sizes (in particular microscopic harmful substances).

In recent years, as a method of inactivating harmful substances instead of conventional heating, electrolysis or the like, a method in which a transition metal oxide (titanium dioxide etc.) or other semiconductor substance that acts as a photocatalyst is used has received attention. For example, Japanese Patent Application Laid-open No. 8-23970 and Japanese Patent Application Laid-open No. 2000-41667 describe methods in which harmful substances such as viruses are inactivated using a photocatalyst such as titanium dioxide.

The harmful substance inactivation method described in Japanese Patent Application Laid-open No. 8-23970 is characterized in that fine particles of the photocatalyst (titanium dioxide etc.) are added to and dispersed in a liquid such as blood, and the dispersion is irradiated with light to inactivate viruses or the like in the liquid. However, with this method, there is a disadvantage that components (proteins etc.) contained in the liquid sample are denatured or decomposed by the strong oxidizing power of the fine particles of the photocatalyst such as titanium dioxide.

On the other hand, the harmful substance inactivation method described in Japanese Patent Application Laid-open No. 2000-41667 is characterized in that a photocatalytic material such as titanium dioxide is held in advance on the surface of a substrate that is able to come into contact with blood or a blood preparation, and then light is irradiated onto the photocatalyst-containing substrate to inactivate harmful substances such as viruses contaminating the blood or blood preparation. However, even with this method, the disadvantage that components (proteins etc.) contained in the blood or blood preparation contacting the substrate are denatured or decomposed by the strong oxidizing power of the photocatalyst such as titanium dioxide has not been resolved.

### DISCLOSURE OF THE INVENTION

It is an object of the present invention to provide a material (composition) that is able to selectively inactivate one or a plurality of specific biologically harmful substances that may be contained in a liquid or gas (including a vapor or aerosol; likewise hereinafter) that is a sample to be treated, and a method of manufacturing the material. Moreover, it is another object of the present invention to provide a method of selectively and efficiently inactivating one or a plurality of specific harmful substances from a sample to be treated (a liquid or a gas) using such a material. Moreover, it is another object to provide a harmful substance treatment apparatus that can be used for selectively and efficiently inactivating one or a plurality of specific biologically harmful substances contained in a sample to be treated.

A material provided by the present invention used to selectively inactivate one or a plurality of specific biologically harmful substances that may be contained in a liquid or gas to be treated is a photocatalytic material (composition) that exhibits a photocatalytic action. This material (composition) is a photocatalytic material (composition) comprising a photocatalyst having a prescribed form, and a holding substance having a holding part that specifically holds a specific biologically harmful substance, the holding substance being disposed in a state fixed to at least a part of a surface of the photocatalyst. Moreover, the photocatalytic material is characterized by having been designed such that substantially all of the holding substance (e.g. at least 80 mol%, typically at least 90 mol%, of the holding substance present on the surface of the photocatalyst) is disposed on the surface of the photocatalyst in a form such as to be able to specifically hold a specific biologically harmful substance in the holding part.

In the present specification, 'photocatalyst' or 'photocatalytic material' refers to a compound for which a photocatalytic reaction occurs upon being irradiated with light. Transition metal oxides such as titanium dioxide and other semiconductors are typical examples included under 'photocatalyst' as defined here.

Moreover, 'specific biologically harmful substance' means, out of biologically harmful substances that contaminate or may contaminate a sample to be treated that takes on the form of either a liquid phase or a gas phase, one or a plurality of harmful substances or parts (fragments) thereof selected as deemed appropriate in accordance with the objective. Moreover, 'inactivate' means to eliminate or markedly reduce the biological hazard of such a harmful substance through the photocatalytic reaction, and includes oxidation, reduction, decomposition and so on of the harmful substance.

The photocatalytic material provided by the present invention having a constitution as described above is a material (composition) that can be suitably used as a harmful substance treating material for inactivating a specific biologically harmful substance from a liquid or gaseous sample to be treated. With the photocatalytic material, a holding substance able to hold (bind) substantially only the specific harmful substance is disposed on the surface of the photocatalyst (typically a transition metal oxide such as titanium dioxide). Furthermore, the majority of the holding substance present on the surface of the photocatalyst is disposed on the surface of the photocatalyst in a state such that the holding part (i.e. a site able to specifically bind to or adsorb the specific harmful substance) can function effectively. The photocatalytic material having this constitution thus has high ability to hold (capture) the specific harmful substance per unit surface area of the photocatalyst. The specific harmful substance can thus be inactivated from the liquid or gas to be treated efficiently using a small amount of the photocatalytic material.

Preferably, the photocatalytic material has bridging molecules that link the holding substance to the photocatalyst ('bridging molecule' refers to a part that forms a bridge between the holding substance and the photocatalyst; likewise hereinafter). Moreover, sites of the holding substance able to chemically bond to a specific site of each of the bridging molecules designed to link to the holding substance are limited to one location or a few locations, and as a result substantially all of the holding substance disposed on the surface of the photocatalyst (e.g. at least 80 mol%, typically at least 90 mol%, of the holding substance present on the surface of the photocatalyst) can adopt a similar three-dimensional form (e.g. a form such that the holding part of each holding substance is orientated in the same direction as viewed from the surface of the photocatalyst). With the photocatalytic material having this constitution, hardly any of the holding substance is disposed on the surface of the photocatalyst in a three-dimensional form for which the inherent function required of the holding part is impaired (e.g. a state in which the holding part itself is bonded to the surface of the photocatalyst). A drop in the photocatalytic action due to the presence of holding substance(s) in such an undesirable three-dimensional form (steric hindrance) or impairment of binding (or adsorption) of the harmful substance to other holding substance(s) present in the vicinity of the holding substance(s) having this undesirable three-dimensional form can thus be prevented.

In a particularly preferable such photocatalytic material, an immunoglobulin (typically IgG) or a fragment thereof (e.g. the Fab' fragment) is used as the holding substance. By using an antibody, the specific harmful substance can be captured selectively and inactivated by the photocatalytic reaction.

Moreover, the photocatalytic material provided by the present invention preferably has a substrate having a prescribed form, with the photocatalyst being formed on a surface of the substrate. An example of such a photocatalytic material is one in which a photocatalyst film is formed on the surface of a ceramic or metallic substrate. The form of the substrate can be determined as appropriate in accordance with the usage. For example, a powdered substrate of particle size (mean particle size not more than 1000 µm, preferably not more than 500 µm) and composition (e.g. made of a dense or porous ceramic having silica, alumina or zeolite as a principal component thereof) such as to enable dispersion in a liquid is preferable. Alternatively, a substrate having a plate form, a tubular form, a granular form, or another regular form, or an irregular form can be used in accordance with the objective.

Moreover, there is provided a method of manufacturing a photocatalytic material as described above. This manufacturing method comprises a step of preparing a photocatalyst that is able to inactivate a biologically harmful substance through photocatalysis, a step of disposing bridging molecules on a surface of the photocatalyst, and a step of bonding a holding substance having a holding part that is able to specifically hold a specific harmful substance to each of the bridging molecules disposed on the surface of the photocatalyst, this being a step of bonding the holding substance to the bridging molecules such that substantially all of the holding substance bonded to the bridging molecules (e.g. at least 80 mol%, typically at least 90 mol%, of the holding substance present on the surface of the photocatalyst) comes to be in a form such as to be able to specifically hold a specific biologically harmful substance in the holding part.

Preferably, molecules each having a specific site designed for linking to the holding substance are used as the bridging molecules. Corresponding to these bridging molecules, a substance for which sites able to chemically bond to the specific site of each of the bridging molecules are limited to one location or a few locations such that substantially all of the holding substance chemically bonded to the bridging molecules and disposed on the surface of the photocatalyst (e.g. at least 80 mol%, typically at least 90 mol%, of the holding substance present on the surface of the photocatalyst) adopts a similar three-dimensional form (typically a state such that the majority of the holding parts of the holding substance molecules disposed on the surface of the photocatalyst are orientated in the same direction) is used as the holding substance.

Through the combination of such bridging molecules and such a holding substance, a photocatalytic material characterized in that substantially all of the holding substance disposed on the surface of the photocatalyst is in a similar three-dimensional form (e.g. a form such that the holding part of each holding substance is orientated in the same direction as viewed from the surface of the photocatalyst) can be obtained. Preferably, an immunoglobulin or a fragment thereof is used as the holding substance. In this case, it is preferable to use one or a plurality of substances known as Fc receptors as the bridging molecules. An Fc receptor will bond specifically to the Fc part of an immunoglobulin (an antibody such as IgG). By using such an Fc receptor as the bridging molecules (bridging parts), substantially all of the immunoglobulin (antibody) or fragment (including the Fc part) thereof disposed on the surface of the photocatalyst can adopt a similar three-dimensional form in a state in which the antigen binding ability of the antigen binding sites (holding parts) is maintained.

Alternatively, it is also preferable for the Fab' fragment of an immunoglobulin to be used as the holding substance, with the bridging molecules and the Fab' fragment being bonded together via the sulfur atom in a mercapto group of the Fab' fragment. In this case as well, substantially all of the molecules of the Fab' fragment of the immunoglobulin (typically IgG) disposed on the surface of the photocatalyst can adopt a similar three-dimensional form in a state in which the antigen binding ability of the antigen binding sites (holding parts) is maintained.

Moreover, according to the present invention, there is provided an apparatus that treats, by photocatalyst, a specific biologically harmful substance contained in a liquid or gas to be treated. The apparatus comprises the photocatalytic material of the present invention, and a light source that irradiates light capable of bringing about a photocatalytic reaction onto the photocatalytic material. According to such an apparatus, a prescribed virus, bacterium, toxic substance (typically including a peptide component), an autoimmune disease pathogenic factor or the like can be inactivated, and further decomposed or eliminated.

With one preferable apparatus provided by the present invention, the photocatalytic material used is formed as a powder, and the apparatus has a flow path that contains the powdered photocatalytic material and through which a fluid containing a prescribed harmful substance is fed. Moreover, the apparatus is characterized in that the light source is provided so as to be able to irradiate light onto the powdered photocatalytic material present in the flow path. With the apparatus having this constitution, the prescribed harmful substance can be captured efficiently from out of a fluid sample introduced into the flow path, and treated (inactivated) by photocatalysis.

Furthermore, it is particularly preferable for the apparatus to have separating means for separating the powdered photocatalytic material out from the fluid flowing through the flow path. By separating the photocatalytic material (powder) out from the fluid, the fluid that has been subjected to the photocatalytic treatment can be used for any of various purposes. Moreover, it is preferable for the separating means used to be of a form such that the photocatalytic material that has been separated out can be recovered. By subjecting the recovered photocatalytic material to suitable treatment (e.g. recycling the photocatalytic material by removing the used holding substance and then bonding new holding substance to the photocatalyst), the photocatalytic material can be reused.

### BRIEF DESCRIPTION OF THE DRAWINGS

FIG. 1 is an explanatory drawing showing schematically the microscopic structure of a photocatalytic material according to an embodiment.
FIG. 2 is a side view showing schematically the constitution of a harmful substance treatment apparatus according to an embodiment.
FIG. 3 is an explanatory drawing showing schematically the microscopic structure of a photocatalytic material according to an embodiment.
FIG. 4 is an explanatory drawing showing schematically a process of preparing Fab' fragments as a holding substance.

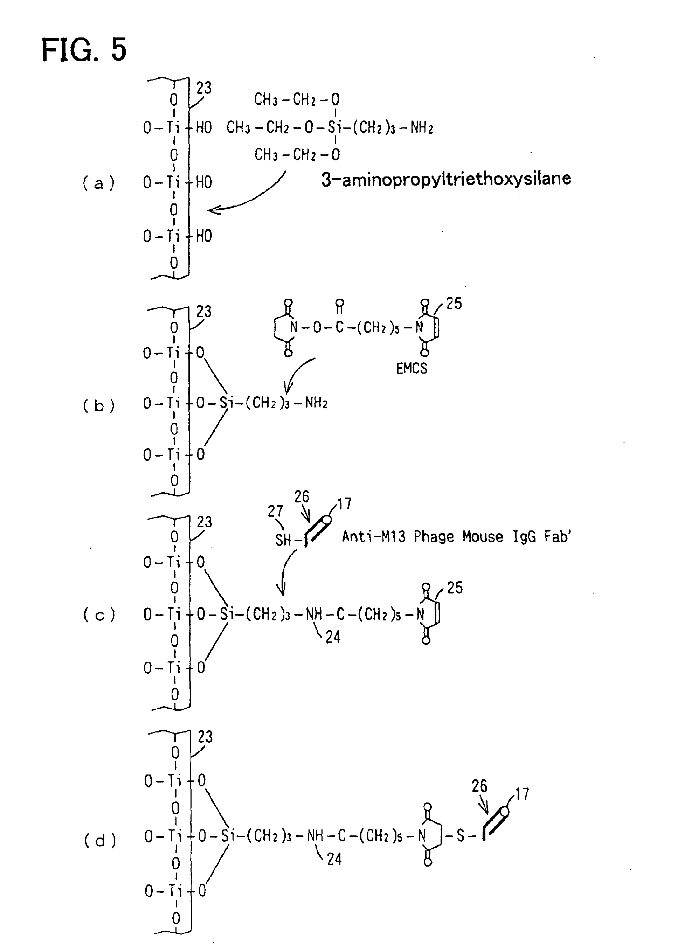

FIGS. 5 are drawings showing schematically the process of a photocatalytic material according to an embodiment being manufactured. Specifically, FIG. 5(a) is an explanatory drawing showing schematically the state of the surface of a powdered transition metal oxide (titanium dioxide), which is a photocatalyst. FIG. 5(b) is an explanatory drawing showing a state after a silane coupling agent has been introduced onto the transition metal oxide. FIG. 5(c) is an explanatory drawing showing a state after N-(6-maleimidocaproyloxy)succinimide (EMCS) has been introduced onto an amino group of the silane coupling agent. FIG. 5(d) is an explanatory drawing showing a state after a holding substance (Fab' fragments) has been linked to the terminal maleimido group of the EMCS.
FIG. 6 is a flowchart showing one method of inactivating a prescribed harmful substance using a photocatalytic material, and a test for verifying the inactivation of the harmful substance after the method has been implemented.
FIG. 7 is a chart showing the ability to inactivate a harmful substance in serum of a photocatalytic material according to an embodiment, along with several comparative test results.
FIG. 8 is a flowchart showing another method of inactivating a prescribed harmful substance using a photocatalytic material, and a test for verifying the inactivation of the harmful substance after the method has been implemented.
FIG. 9 is a chart showing the ability to inactivate a harmful substance in serum of a photocatalytic material according to an embodiment, along with several comparative test results.
FIG. 10 is an explanatory drawing showing schematically the microscopic structure of a photocatalytic material according to an embodiment.
FIG. 11 is a side view showing schematically the constitution of a harmful substance treatment apparatus according to an embodiment.
FIG. 12 is a side view showing schematically the constitution of a harmful substance treatment apparatus according to an embodiment.

### BEST MODE FOR CARRYING OUT THE INVENTION

Preferable embodiments of the present invention will now be described with reference to the drawings. Note that technical matters that are required for carrying out the present invention but are not particularly mentioned in the present specification are matters of design variation that could be apprehended by a person skilled in the art based on prior art. The present invention can be carried out based on the technical details disclosed in the present specification and/or drawings, by referring to common general technical knowledge in the field in question as appropriate.

A photocatalytic material (composition) of the present invention is a material that has as principal constituent elements thereof a holding substance having holding specificity of selectively holding a specific biologically harmful substance, and a photocatalyst that is able to inactivate the harmful substance held by the holding substance through photocatalysis. Of these, the photocatalyst should be a compound that can bring about a photocatalytic reaction upon absorbing ultraviolet radiation or the like. For example, a transition metal oxide or another semiconductor substance is suitable. Titanium dioxide is particularly suitable.

The form of the photocatalyst can be changed as appropriate in accordance with the form of usage, with there being no limitations so long as the form is such that the photocatalyst can contact the sample to be treated efficiently. For example, in the case that the sample to be treated is a liquid, a powder, beads (small spheres), a plate form, a film form, a tubular form, a honeycomb form, or a porous form like a sponge is suitable. In the case that the sample to be treated is a gas, a tubular form, a honeycomb form, or a porous form like a sponge is suitable. Typically, the photocatalytic material of the present invention includes a metallic or ceramic substrate (support), and the photocatalyst is formed as a layer (film) on the surface of the substrate. There are no particular limitations on the form of the substrate, with it being possible to use a powder, beads (small spheres), a plate form, a film form, a tubular form, a honeycomb form, or a porous form like a sponge in accordance with the usage. A substrate having good optical transparency (e.g. a glass substrate) is preferable.

A conventional publicly known film formation method can be used with no particular limitations to form the film-like photocatalyst layer on the surface of the substrate (including the internal walls of the pores in the case of a porous form). For example, a photocatalyst layer (thin film) made of titanium dioxide or the like can be formed on the surface of a ceramic or metallic substrate using a sputtering method, an ion plating method, an electron beam deposition method, a chemical vapor deposition (CVD) method, a spray coating method, a dip coating method, a sol-gel method or the like. A preferable film formation method is CVD, with normal pressure (atmospheric pressure) CVD in which a vapor phase chemical reaction is carried out under atmospheric pressure being particularly preferable. For example, a mist containing a raw material compound (typically an organometallic compound such as a titanium alkoxide) that has been made into fine droplets through ultrasonic treatment is subjected to thermal decomposition at high temperature and vapor transport, and the decomposition product (typically a metal oxide) is accumulated on the substrate, which has been heated to approximately 400°C to 550°C or above. As a result, a photocatalyst layer (film) made of a metal oxide such as titanium dioxide can be formed fairly evenly over a prescribed region of the substrate surface.

Examples of the holding substance in the photocatalytic material of the present invention include various antibody molecules and antibody fragments, and receptors possessed by tissue or cells that act as the host of a prescribed virus or bacterium (i.e. substances to which a virus or bacterial toxin that is a harmful substance binds specifically) and receptor fragments.

For example, antibodies for antigenic substances present at a prescribed site of a bacterium (outer membrane, capsule, flagellum, etc.) as shown in Table 1 can be suitably used as the holding substance.

**Table 1**

| Antigen | Site | Antibody |
|---|---|---|
| O-antigen | Outer membrane | O-antibody |
| K-antigen | Capsule | K-antibody |
| H-antigen | Flagellum | H-antibody |

**Table 2**

| Virus | Receptor | Disease | Antibody |
|---|---|---|---|
| Herpesviridae Herpes simplex | Nerve cell surface antigen | Encephalitis | Anti-herpes simplex antibody |
| Hepadnaviridae Hepatitis B virus | Liver cell surface antigen | Hepatitis, liver cancer | Anti-hepatitis B virus antibody |
| Picomaviridae Poliovirus | Nerve cell surface antigen | Encephalitis, myelitis | Anti-poliovirus antibody |
| Togaviridae Alphavirus | Nerve cell surface antigen | Encephalitis | Anti-alphavirus antibody |
| Flaviviridae Yellow fever virus Hepatitis C virus | Liver cell surface antigen Liver cell surface antigen | Acute liver failure (necrosis), hemorrhage Hepatitis, liver cancer | Anti-yellow fever virus antibody Anti-hepatitis C virus antibody |
| Rhabdoviridae Rabies virus | Nerve cell surface antigen | Encephalitis, myelitis | Anti-rabies virus antibody |
| Filoviridae Marburg virus Ebola virus | Liver cell surface antigen Liver cell surface antigen | Acute liver failure (necrosis), hemorrhage Acute liver failure (necrosis), hemorrhage | Anti-Marburg virus antibody Anti-Ebola virus antibody |
| Arenaviridae Lassa virus | Lung, liver, nerve cell surface antigen | Interstitial pneumonia, hepatitis, encephalitis, hemorrhage | Anti-Lassa virus antibody |
| Bunyaviridae Crimean-Congo hemorrhagic fever Hemorrhagic fever with renal syndrome | Lung, liver, kidney cell surface antigen Lung, liver, kidney cell surface antigen | Pneumonia, hepatitis, nephritis, hemorrhage Pneumonia, hepatitis, nephritis, hemorrhage | Anti-Crimean-Congo hemorrhagic fever antibody Anti-hemorrhagic fever with renal syndrome antibody |
| Retroviridae Human immunodeficiency virus (HIV) | T-cell surface CD4 antigen | Acquired immunodeficiency | Anti-HIV antibody |

**Table 3**

| Name of toxin | Producing bacteria | Disease | Antibody |
|---|---|---|---|
| Endoxin | Common to Gram-positive bacteria | Endotoxin shock Disseminated intravascular coagulation | Anti-endotoxin antibody |
| Verotoxin | E. coli O-157 | Intestinal hemorrhage, Hemolytic uremic syndrome | Anti-verotoxin antibody |
| Alpha toxin | Staphylococcus aureus | Dermonecrosis, hemolysis | Anti-alpha toxin antibody |
| Leukocidin | Staphylococcus aureus | Leukocyte destruction | Anti-leukocidin antibody |
| Enterotoxin (SEA, SEB) | Staphylococcus aureus | Food poisoning Contributes to atopic dermatitis | Anti-SEA antibody Anti-SEB antibod |
| Exfoliative toxin | Staphylococcus aureus | Scalded skin syndrome | Anti-exfoliative toxin antibody |
| Toxic shock syndrome toxin (TSST) | Staphylococcus aureus | Shock | Anti-TSST antibody |
| Streptococcal Toxic Shock Syndrome toxin (STSS) | Group A Streptococcus | Shock | Anti-STTS antibody |
| Botulinus toxin | Clostridium botulinum | Flaccid paralysis | Anti-Clostridium botulinum (A-G) antibody |
| Tetanospamin | Clostridium tetani | Spastic paralysis | Anti-tetanospamin antibody |
| Diphtheria toxin | Corynebacterium diphtheriae | Heart failure, peripheral vascular motor nerve paralysis | Anti-diphtheria toxin (A,B) antibody |

Alternatively, receptors that exhibit strong binding ability to part of a pathogenic virus as shown in Table 2 or anti-virus antibodies or analog substances that can be regarded as immunologically equivalent to such receptors can be suitably used as the holding substance. Alternatively, antibodies against bacterial toxins as shown in Table 3 can be suitably used as the holding substance. Note that regarding the holding of the harmful substance by the holding substance, no distinction is made between physical binding such as adsorption and chemical bonding such as covalent bonding; the holding may be of any form (binding form) that fastens the harmful substance to the holding substance.

By using any of the antibodies or receptors shown in the above tables (or a manmade analog substance) as the holding substance, a harmful substance that binds specifically to the holding substance used (examples are given in the tables) can be targeted for treatment by the photocatalytic material of the present invention (i.e. can be made to be a target substance to be inactivated). As toxins, in addition to the various bacterial toxins shown in Table 3, any toxin that exhibits a specific antigenicity can be targeted, for example globefish poison (tetrodotoxin), snake venoms, scorpion and spider venoms, and insect venoms such as bee venom.

For example, with bacterial cells, there are three main types of site that exhibit strong antigenicity as shown in Table 1, and furthermore the antigenicity varies according to the type of bacteria. A specific type of bacteria can thus be treated (inactivated) selectively in accordance with the details of the holding substance. For example, by using an antibody that binds specifically to the O-antigen possessed by the O-157 strain of E. coli as the holding substance, this strain can be selectively held and subjected to the photocatalytic treatment.

Alternatively, by using an antibody or the like against an antigenic site possessed in common by a broad range of bacteria or viruses as the holding substance, rather than limiting to a specific type, a relatively broad range of types of bacteria (e.g. all bacteria that are negative under Gram staining) or viruses (e.g. viruses that belong to the Flaviviridae family) can be made to be the specific biologically harmful substances that are targeted.

Moreover, the holding substance is not limited to being one type, but rather two or more holding substances may be used. For example, by using an antibody that binds specifically to the outer membrane or flagellum of a certain type of bacterium and an antibody that binds specifically to a toxin (protein) that is produced by this bacterium and secreted outside the bacterial cells together as holding substances, the bacterium and the toxin can both be selectively treated by photocatalysis as specific harmful substances from a prescribed sample to be treated (a blood sample, liquid food, etc.).

With the photocatalytic material of the present invention, typically, a holding substance as described above is linked to the surface of the photocatalyst via bridging molecules. Bridging molecules suitable for this purpose can be constituted from a compound (typically straight chain molecules) having a hydrolyzable group (a halogen group, an alkoxy group, etc.) able to bond to the inorganic compound (transition metal oxide) that is the photocatalyst, and a functional group (an amino group, a vinyl group, an epoxy group, a methacryl group, a mercapto group, etc.) able to bond to the organic compound that is the holding substance. In general, a compound that is used as a coupling agent is suitable. A silane coupling agent having an amino group, for example an aminoalkylethoxysilane such as 3-aminopropyltriethoxysilane, or an aminoalkylmethoxysilane such as 3-aminopropyltrimethoxysilane, p-aminophenyltrimethoxysilane or N-2-aminoethyl-3-aminopropyltrimethoxysilane, can be preferably used to constitute the bridging molecules (bridging parts). Note that any of various conventional publicly known methods can be used to bond the coupling agent to the surface of the transition metal oxide (photocatalyst) such as titanium dioxide.

From the viewpoint of being able to bond the silane coupling agent or the like to the surface of the photocatalyst at high density, it is preferable to use a transition metal oxide that has hydroxyl groups on the surface thereof in air at normal temperature (e.g. titanium dioxide), but there is no limitation to a transition metal oxide having such a property. When carrying out the present invention, in the case of using a semiconductor substance not having many hydroxyl groups present on the surface thereof as the photocatalyst, the surface of the photocatalyst may be treated in advance with a suitable acid, thus forming a large number of hydroxyl groups on the surface thereof.

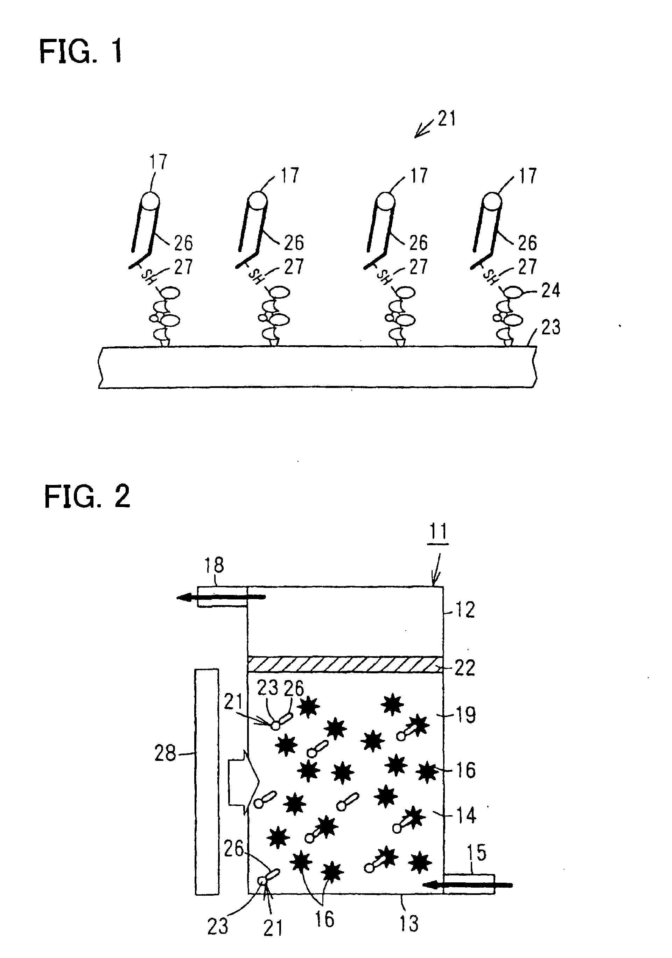

Incidentally, when linking a prescribed holding substance to the bridging molecules, it is preferable to design or select the bonding part of the bridging molecules and the bonding part of the holding substance such that substantially all of the holding substance is disposed on the surface of the photocatalyst in a form such as to be able to specifically hold the specific biologically harmful substance in the holding part. Typically, a functional group that is present at only one or a few (preferably approximately 2 or 3) locations in the holding substance is selected as the bonding sites on the holding substance side, and a part (functional group) that will specifically bond to this functional group is constructed in advance on the corresponding bridging molecule side. For example, a fragment having one or two mercapto groups (thiol groups: SH groups) formed through the dissociation of the S-S bond(s) present in the hinge region of an immunoglobulin (typically IgG) (e.g. an Fab' fragment) is used as the holding substance, and a functional group (e.g. a maleimido group) that will specifically bond to the SH group(s) is introduced in advance into the bridging molecules. With this design, substantially all of the antibody fragments (Fab' fragment etc.) are linked via the SH groups thereof to the mercapto group parts of the bridging molecules. As a result, substantially all of the holding substances (antibody fragment) bonded to the surface of the photocatalyst via the bridging molecules can adopt a similar three-dimensional form orientated in approximately the same direction (see FIG. 1, described later).

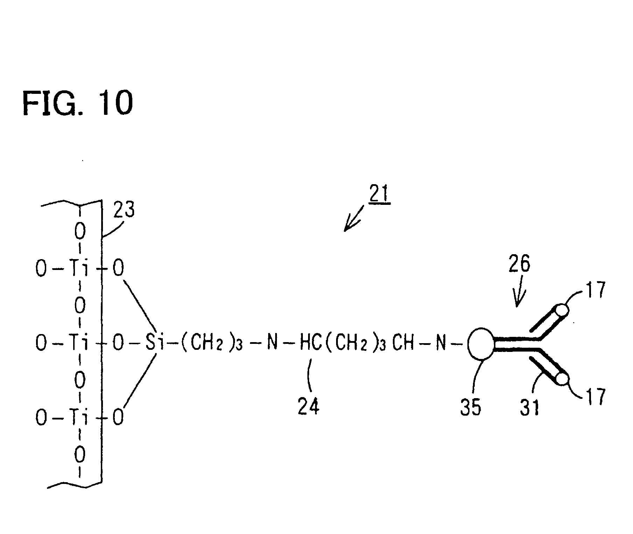

Alternatively, a substance having a part that bonds specifically to a specific site of the holding substance may be introduced into the bridging molecules (preferably bridging molecules that do not have a part that will chemically bond to the holding substance other than via this substance). For example, an Fc receptor (including both the natural form and analog substances having the similar function) that will selectively bond to the Fc part of an immunoglobulin (typically IgG) may be introduced in advance into the bridging molecules. With this design, substantially all of the antibody (having the Fc part) is linked via the specific bonding site of the Fc part thereof to the Fc receptor of the bridging molecules. As a result, substantially all of the holding substance (antibody) bonded to the surface of the photocatalyst via the bridging molecules can adopt a similar three-dimensional form (see FIG. 10, described later).

The present invention will now be described in more detail through examples.

FIG. 2 is a view showing schematically the constitution of a photocatalytic treatment apparatus 11 using a photocatalytic material 21 shown in FIG. 1.

The apparatus 11 has a vessel (that forms a flow path into which is introduced a fluid to be treated) 12 formed into an approximately cylindrical shape using a material having high optical transparency such as silica glass. An inflow port is formed in a bottom part 13 of the vessel 12, and an inflow pipe 15 from which is introduced the fluid 14 to be treated is connected to the inflow port.

Moreover, an outflow pipe 18 from which the fluid 14 is discharged is provided at a top part of the vessel (flow path) 12. Preferably, an introducing pipe is formed branching off such that some of the fluid 14 discharged from the outflow pipe 18 is reintroduced into the vessel 12 from the inflow pipe 15, i.e. a constitution is adopted such that some of the fluid 14 is made to circulate around.

Moreover, as shown in FIG. 2, a treatment chamber 19 is formed toward the top of the vessel 12 as an internal space communicating with the inflow pipe 15. The treatment chamber 19 is filled with a powdered photocatalytic material (material for photocatalytically treating a harmful substance) 21 having antigen binding (recognizing) sites 17 corresponding to the holding parts described earlier. Furthermore, a filter 22 that partitions the inside of the vessel 12 into the treatment chamber 19 and a part communicating with the outflow pipe 18 above the treatment chamber 19 is provided above the treatment chamber 19. This filter 22 corresponds to the separating and recovering means mentioned earlier, and is able to separate out the photocatalytic material 21 filled into the treatment chamber 19 from the fluid so that the photocatalytic material 21 can be recovered. That is, according to the present apparatus 11, outflow of the photocatalytic material 21 from the treatment chamber 19 is prevented, and hence inactivation of a specific harmful substance 16 can be carried out efficiently using the photocatalytic material 21. A large number of holes or voids of a size such that the photocatalytic material (particles) 21 cannot pass through but the fluid 14 can flow through are formed in the filter 22

As shown in FIG. 2, the apparatus 11 has provided therein a light source 28 that irradiates light onto the photocatalytic material 21 in the treatment chamber 19 so that a photocatalyst 23 contained in the photocatalytic material 21 can be optically excited. There are no particular limitations on the light source used so long as the light source is one that can irradiate light able to bring about a photocatalytic reaction with the photocatalyst 23. For example, in the case of using a transition metal oxide such as titanium dioxide that can be excited by ultraviolet radiation as the photocatalyst, any of various UV lamps that emit ultraviolet radiation can be used. Moreover, a fluorescent lamp with a peak wavelength in the visible region at approximately 600 nm, a black light having a peak at a wavelength in a range of 300 nm to 420 nm, a low-pressure mercury lamp (also capable of producing ozone) having a peak at approximately 185 nm, or the like can also be suitably used. It is preferable to use a light source having a peak wavelength in a range of approximately 150 nm to approximately 600 nm.

Next, a preferable example of the manufacture of the powdered photocatalytic material 21 installed in the apparatus 11 shown in FIG. 2 will be described with reference to the drawings.

As shown in FIG. 1, with the photocatalytic material 21, a holding substance 26 having specificity of specifically binding to the specific harmful substance 16 is linked to the surface of the powdered titanium dioxide 23 via bridging molecules 24. The holding substance 26 is the Fab' fragment of human or mammalian IgG having antigen binding sites 17 that specifically bind to a prescribed antigen.

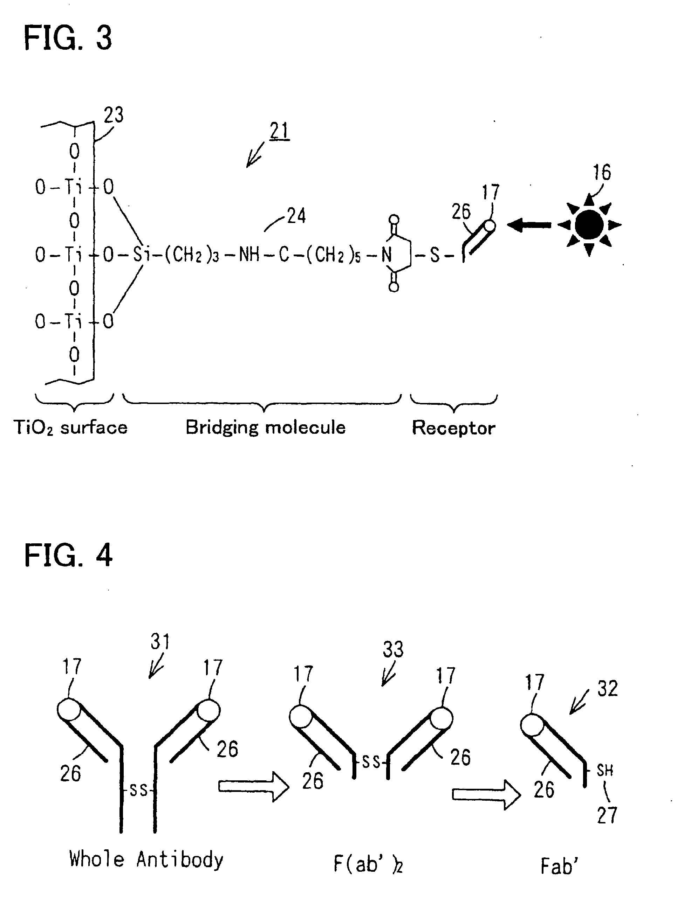

As shown in FIG. 3, an aminoalkylethoxysilane (here, 3-aminopropyltriethoxysilane) constituting part of the bridging molecules 24 is bonded to hydroxyl groups bonded to the surface of the titanium dioxide. Next, the N-hydroxysuccinimide active ester of the N-succinimidyl-6-maleimidohexanoate (N-(6-maleimidocaproyloxy)succinimide) (product of Dojindo Laboratories used; hereinafter abbreviated to 'EMCS'), which constitutes part of the bridging molecules 24, is reacted with the amino group of the bonded 3-aminopropyltriethoxysilane, thus bonding the EMCS to the amino group. A thiol group 27 that is a functional group of the holding substance (Fab' fragments) 26 is then selectively bonded to the terminal maleimido group 25 of the bonded EMCS.

Following is a description of the process of preparing the holding substance (Fab' fragments) 32 with reference to FIG. 4.

First, anti-M13 phage mouse IgG, which is a whole antibody 31 manufactured with part of the protein constituting M13 phage as an antigen, was purchased from Progen Biotechnik GmbH.

A liquid containing this antibody (IgG) 31 was concentrated and purified using an ultrafiltration unit (Centricon (registered trademark) YM-100) made by Amicon. The concentrated fraction obtained (i.e. a liquid containing the anti-M13 phage mouse IgG at high concentration) was subjected to buffer exchange using a 0.1M citrate buffer (pH 3.8).

Next, pepsin was added to the purified IgG-containing liquid in an amount to make the concentration 5 µg/mg(anti-M13 phage mouse IgG), and incubation was carried out at 37°C for 18 hours. The Fc part of the IgG was hydrolyzed by the enzyme, thus obtaining F(ab')₂ fragments 33. In the F(ab')₂ fragment 33 shown in FIG. 4, only one S-S linkage has been drawn, but this is only schematic for explanation purposes, and, as is well known, two S-S linkage sites may be present in the terminal part of the F(ab')₂ fragments 33 obtained through ordinary pepsin decomposition of IgG.

After that, a suitable amount of a 3M Tris-HCl buffer (pH 8.8) was added to the enzyme-containing liquid to adjust the pH to 7.0, thus stopping the enzyme reaction. Centrifugation was then carried out for 30 minutes at 10000×g (1g = 9.80665m·s⁻²), thus removing the solid component.

Next, the F(ab')₂ fragments 33 were purified using Protein G (here, HiTrap (trademark) Protein G made by Amersham Pharmacia was used as in the accompanying manual). Note that the F(ab')₂ fragments 33 may also be purified using Protein A, which like Protein G has a high binding specificity to the Fc part of IgG.

The liquid containing the purified F(ab')₂ fragments 33 was concentrated and purified using an ultrafiltration unit (Centricon (registered trademark) YM-30) made by Amicon. The concentrated fraction obtained (i.e. a liquid containing the F(ab')₂ fragments at high concentration) was subjected to buffer exchange using a 0.1M tris-HCl buffer (pH 7.6).

Next, after the buffer exchange and concentration, cysteine was added to the F(ab')₂ fragment 33-containing liquid to a concentration of 30 mM, and incubation was carried out at 37°C for 15 minutes. The S-S linkages in the fragments were broken through this treatment, thus obtaining two Fab' fragments 32 from each F(ab')₂ fragment.

The liquid containing the Fab' fragments 32 was further concentrated and purified using an ultrafiltration unit (Centricon (registered trademark) YM-30) made by Amicon. The concentrated fraction obtained was subjected to buffer exchange using a 0.1M phosphate buffer (pH 7.4) containing 5 mM of ethylenediamine tetraacetic acid (EDTA).

Through the above, purified anti-M13 phage Fab' fragments 32 were obtained.

Anti-E. coli Fab' fragments 32 were similarly manufactured. Specifically, anti-E. coli rabbit IgG, which is a whole antibody 31 manufactured with part of E. coli as an antigen, was purchased from Virostat Inc.

A liquid containing this antibody (IgG) 31 was concentrated and purified using an ultrafiltration unit (Centricon (registered trademark) YM-100) made by Amicon. The concentrated fraction obtained (i.e. a liquid containing the anti-E. coli rabbit IgG at high concentration) was subjected to buffer exchange using a 0.1M citrate buffer (pH 4.2). Next, pepsin was added to the purified IgG-containing liquid in an amount to make the concentration 5 µg/mg(anti-E. coli rabbit IgG), and incubation was carried out at 37°C for 6 hours. After that, a process like that used to purify the anti-M13 phage Fab' fragments was carried out, thus obtaining purified anti-E. coli Fab' fragments 32.

Powdered photocatalytic materials were manufactured through the following procedure using Fab' fragments 32 obtained as described above as the holding substance 26.

As shown in FIG. 5(a), powdered titanium dioxide (made by Wako Pure Chemical Industries, Ltd.) was suitably washed using nitric acid or the like and then dried, thus introducing hydroxyl groups onto the surface of the titanium dioxide powder 23.

Next, bridging molecules were introduced onto the surface of the titanium dioxide (photocatalyst) 23. That is, the titanium dioxide 23 was immersed in a toluene solution containing 3-aminopropyltriethoxysilane, which is a silane coupling agent or surfactant, thus bonding the 3-aminopropyltriethoxysilane to the hydroxyl groups positioned on the surface of the titanium dioxide 23 as shown in FIG. 5(b). As a result, amino groups were introduced onto the surface of the titanium dioxide 23 as shown in FIG. 5(b).

A suitable amount of EMCS (made by Dojindo Laboratories) was added to dimethylformamide (DMF) liquid, and thorough mixing was carried out, thus obtaining an EMCS solution. Next, the titanium dioxide powder 23 onto which the amino groups had been introduced was washed, and then immersed in the EMCS solution, whereby the N-hydroxysuccinimide active ester possessed by the EMCS was linked to the amino groups as shown in FIG. 5(c). As a result, a maleimido group 25 was introduced onto the end of each of the bridging molecules 24 on the surface of the titanium dioxide 23 as shown in FIG. 5(c).

Next, the titanium dioxide powder 23 onto which the maleimido groups 25 had been introduced was washed, and then added to the concentrated purified liquid of the (mouse IgG-derived) anti-M13 phage Fab' fragments 32, and incubation was carried out for 24 hours at 4°C while stirring. As a result, the terminal maleimido groups 25 of the bridging molecules 24 fixed to the surface of the titanium dioxide powder 23 and the SH groups 27 of the anti-M13 phage Fab' fragments 32 were linked together as shown in FIG. 5(d), thus obtaining a photocatalytic material 21 having a structure as shown in FIG. 3. The photocatalytic material 21 can be suitably used as a medical bioreactor with a purpose of inactivating M13 phage contained in a fluid to be treated.

Moreover, a similar process to that described above was carried out, thus manufacturing a photocatalytic material 21 having a constitution in which the terminal maleimido groups 25 of bridging molecules 24 fixed to the surface of titanium dioxide powder 23 and the SH groups of anti-E. coli Fab' fragments are linked together (FIG. 3).

Next, a preferable mode of use of the apparatus 11 shown in FIG. 2 will be described. First, a photocatalytic material 21 is filled into the treatment chamber 19. A fluid (typically a liquid such as a blood sample) 14 to be treated is then introduced at a prescribed flow rate from the inflow pipe 15 into the treatment chamber 19 filled with the photocatalytic material 21, and the light source (here, a UV lamp) 28 is turned on.

When the fluid 14 is introduced into the treatment chamber 19 in this state, a harmful substance (e.g. the above-mentioned phage or E. coli) 16 contained in the fluid 14 is selectively adsorbed (bound) onto the holding parts (the antigen binding sites) of the holding substance (i.e. the Fab' fragments) of the photocatalytic material 21. As a result, the harmful substance 16 is removed from the fluid 14, and then the fluid 14 passes through the filter 22 and is discharged to the outside from the outflow pipe 18. Moreover, the harmful substance 16 held by the holding substance 26 can be inactivated by photocatalysis. Specifically, hydroxy radicals (·OH) are produced from moisture (H₂O) that has come into contact with the surface of the titanium dioxide that has been excited by the ultraviolet radiation from the light source 28, and hence strong oxidation reactions can occur in the vicinity of the titanium dioxide. Moreover, super oxide anions (·O₂⁻) are produced from oxygen that has come into contact with the surface of the titanium dioxide that has been excited by the ultraviolet radiation, and hence strong reduction reactions can occur in the vicinity of the titanium dioxide. The targeted harmful substance can be decomposed through such an oxidation reaction and/or reduction reaction (i.e. the photocatalysis).

A number of performance evaluation tests were carried out on photocatalytic materials 21 manufactured as described above.

### (Test Examples 1)

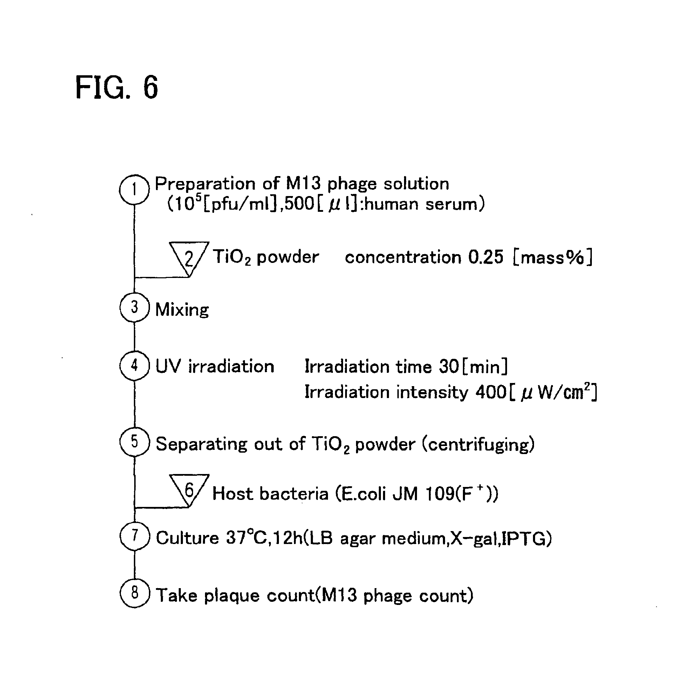

The M13 phage inactivating ability of a photocatalytic material manufactured as described above was evaluated following the procedure shown in FIG. 6. That is, M13 phage was added to 500 µl of human serum to a concentration of 10⁵ pfu/ml, thus preparing an M13 phage test solution. The photocatalytic material having (mouse IgG-derived) anti-M13 phage Fab' fragments as a holding substance (hereinafter referred to as 'Fab'-TiO₂') was added to the solution to a concentration of 0.25 mass%. For comparison, separate to the photocatalytic material manufactured through the process described above (Fab'-TiO₂: see FIG. 1), a sample was separately manufactured by adding a material comprising titanium dioxide powder only (i.e. a photocatalytic material not having the bridging molecules and the holding substance introduced thereon) to the M13 phage test solution in an amount to make the concentration the same as above (0.25 mass%).

Moreover, as another comparative example, a photocatalytic material having as a holding substance the anti-M13 phage mouse IgG before carrying out the pepsin treatment (hereinafter referred to as 'IgG-TiO₂') was manufactured, and a sample was separately manufactured by adding the IgG-TiO₂ to the M13 phage test solution in an amount to make the concentration the same as above (0.25 mass%). The manufacture of the IgG-TiO₂ used in this comparative test was carried out using the following procedure.

The previously mentioned titanium dioxide powder (made by Wako Pure Chemical Industries, Ltd.) was mixed into toluene containing 3-aminopropyltriethoxysilane, and refluxing was carried out for a prescribed time. Through this refluxing, the 3-aminopropyltriethoxysilane was bonded onto the surface of the titanium dioxide. After the refluxing had been completed, the titanium dioxide powder was washed a plurality of times with an alcohol such as methanol and a 0.1M potassium phosphate buffer. After that, glutaraldehyde was added to the buffer to a concentration of 3.0 wt%. Stirring was then carried out thoroughly (1 to 24 hours) at room temperature. As a result, bridging molecules in which one of the aldehyde groups of the glutaraldehyde is bonded to the terminal amino group of the 3-aminopropyltriethoxysilane were formed. Next, washing with stirring was carried out thoroughly using a 0.1M potassium phosphate buffer not containing glutaraldehyde (pH 7.5), and then a suitable amount of anti-M13 phage mouse IgG was added to the phosphate buffer, and then incubation was carried out for 24 hours at 4°C while stirring. As a result, a photocatalytic material in which one of the amino groups present in the anti-M13 phage mouse IgG is bonded to the terminal aldehyde group of each of the bridging molecules (IgG-TiO₂) was obtained. The photocatalytic material (IgG-TiO₂) obtained in this way was recovered by being filtered off from the phosphate buffer, and was then washed with an NaCl aqueous solution, and dewatered (dried). The photocatalytic material was put into a 1M tris-HCl buffer (pH 7.5), and the mixture was left for 1 hour at room temperature, thus inactivating the aldehyde groups of the remaining glutaraldehyde.

Each of the M13 phage solutions to which the Fab'-TiO₂, the IgG-TiO₂, or TiO₂ only had been added in the amount stated above was then irradiated for 30 minutes with ultraviolet radiation of wavelength 300 nm to 400 nm. A black light (10W) made by Toshiba Lighting and Technology Corporation was used as the light source. The intensity of the irradiated ultraviolet radiation at the surface of the titanium dioxide at this time was made to be approximately 400 µW/cm² (note that the intensity of the ultraviolet radiation was measured using a UM-10 ultraviolet radiation measuring instrument (with a UM-360 light receiver) made by Minolta).

For comparison, samples were also prepared in which each of the M13 phage solutions to which the Fab'-TiO₂, the IgG-TiO₂, or TiO₂ only had been added in the amount stated above was left for 30 minutes without irradiating with light.

After the 30 minutes had passed, each of the samples that had been irradiated with light and the samples that had not been irradiated with light were subjected to centrifugation to separate off the photocatalytic material. Each of the supernatants recovered after the centrifugation was then cultured together with E. coli JM 109 (F⁺), which is an M13 phage host.

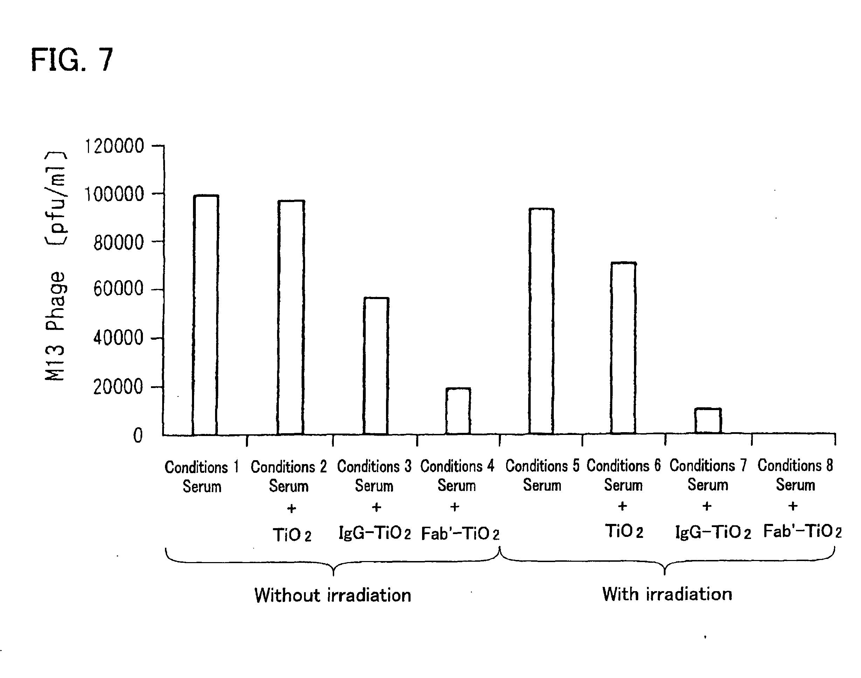

That is, suitable amounts of the supernatant and an E. coli JM 109 (F⁺) culture solution were dripped onto an LB (Luria-Bertani) agar medium containing X-gal (5-bromo-4-chloro-3-indolyl-β-D-galactoside) and IPTG (isopropyl-β-D-thiogalactopyranoside), and culturing was carried out for 12 hours in an incubator at 37°C. After the culturing had been completed, the plaque count on the agar medium (i.e. the active M13 phage count) was taken. The results are shown in FIG. 7.

As shown in FIG. 7, with both the sample for which IgG-TiO₂ was added but irradiation with light was not carried out (Conditions 3 in FIG. 7) and the sample for which Fab'-TiO₂ was added but irradiation with light was not carried out (Conditions 4 in FIG. 7), even though irradiation with light was not carried out, the M13 phage count in the serum was reduced. It was thus confirmed that with both of these photocatalytic materials, the M13 phage was selectively adsorbed (bound) onto the antigen binding sites of the holding substance (the IgG or the Fab' fragments). However, the percentage reduction of the M13 phage count in the sample was greater for the sample for which Fab'-TiO₂ was added (Conditions 4) than for the sample for which IgG-TiO₂ was added (Conditions 3).

Moving on, with both the sample for which IgG-TiO₂ was added and irradiation with light was carried out (Conditions 7 in FIG. 7) and the sample for which Fab'-TiO₂ was added and irradiation with light was carried out (Conditions 8 in FIG. 7), the M13 phage count in the serum was markedly reduced. In particular, with the sample for which Fab'-TiO₂ was added (Conditions 8), the presence of M13 phage was not detected. Note that with the sample for which a photocatalytic material not containing a holding substance (TiO₂ only) was added and irradiation with light was carried out (Conditions 6 in FIG. 7), the percentage reduction of the M13 phage count in the serum was very low.

### (Test Examples 2)

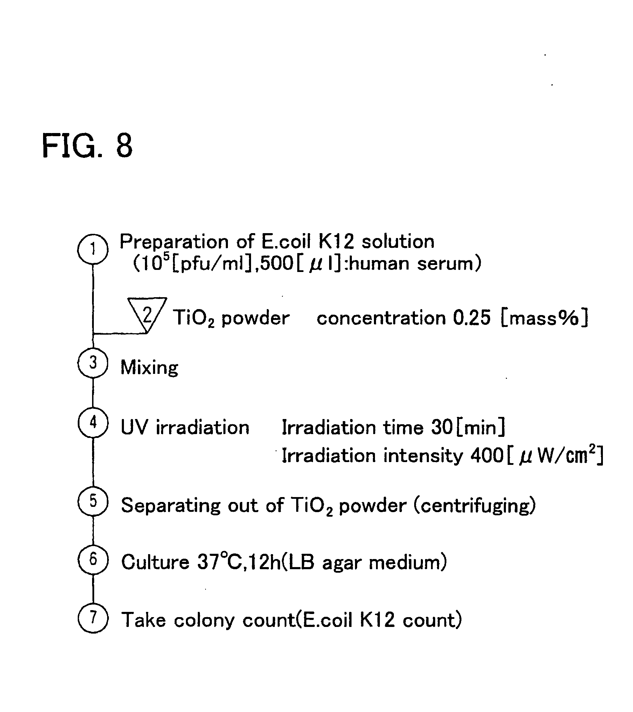

The E. coli inactivating ability of a photocatalytic material manufactured as described above was evaluated following the procedure shown in FIG. 8. That is, E. coli K12 was added to 500 µl of human serum to a concentration of 10⁵ pfu/ml, thus preparing an E. coli test solution. The photocatalytic material having (rabbit IgG-derived) anti-E. coli Fab' fragments as a holding substance ('Fab'-TiO₂') was added to the solution to a concentration of 0.25 mass%. For comparison, separate to the Fab'-TiO₂, a sample was separately manufactured by adding a material comprising titanium dioxide powder only (i.e. a photocatalytic material not having the bridging molecules and the holding substance introduced thereon) to the E. coli test solution in an amount to make the concentration the same as above (0.25 mass%). Moreover, as another comparative example, a photocatalytic material having as a holding substance the anti-E. coli rabbit IgG before carrying out the pepsin treatment ('IgG-TiO₂') was manufactured following a similar procedure to that used for manufacturing the photocatalytic material having anti-M13 phage rabbit IgG as a holding substance described earlier, and a sample was separately manufactured by adding this IgG-TiO₂ to the E. coli test solution in an amount to make the concentration the same as above (0.25 mass%).

As in Test Examples 1, each of the E. coli solutions (serum samples) to which the Fab'-TiO₂, the IgG-TiO₂, or TiO₂ only had been added in the amount stated above was then irradiated for 30 minutes with ultraviolet radiation of wavelength 300 nm to 400 nm. The intensity of the irradiated ultraviolet radiation at the surface of the titanium dioxide at this time was made to be approximately 400 µW/cm². For comparison, samples were also prepared in which each of the E. coli solutions to which the Fab'-TiO₂, the IgG-TiO₂, or TiO₂ only had been added in the amount stated above was left for 30 minutes without irradiating with light.

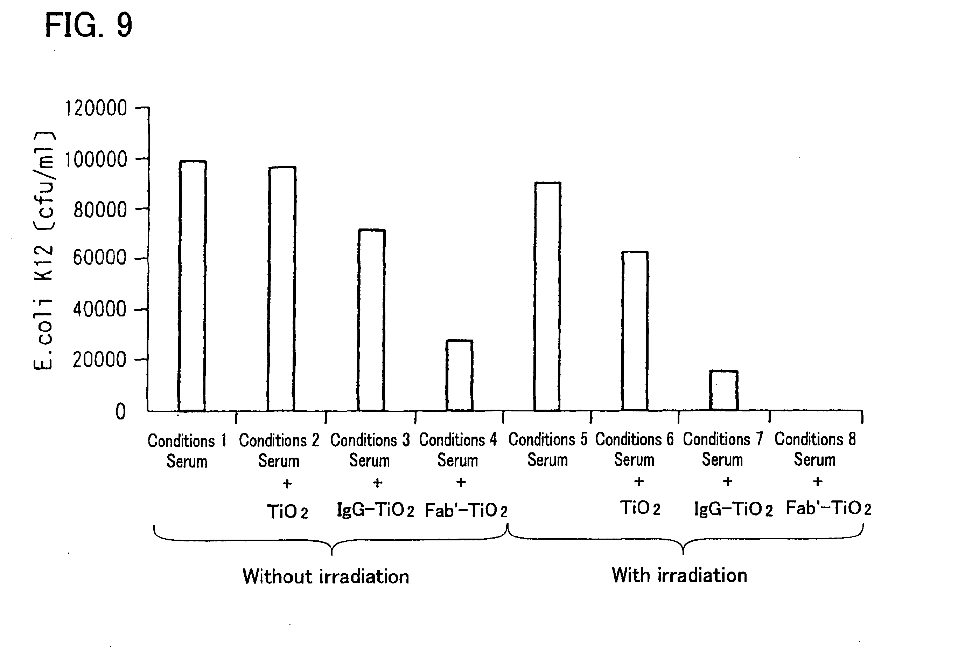

After the 30 minutes had passed, each of the samples that had been irradiated with light and the samples that had not been irradiated with light were subjected to relatively mild centrifugation to separate off the photocatalytic material. Each of the supernatants (containing the bacterial cells) recovered after the centrifugation was then dripped in a suitable amount onto an LB agar medium containing X-gal and IPTG, and culturing was carried out for 12 hours in an incubator at 37°C. After the culturing had been completed, the colony count on the agar medium (i.e. the E. coli count) was taken. The results are shown in FIG. 9. As shown in FIG. 9, the results of Test Examples 2 were very similar to those of Test Examples 1.

The results of Test Examples 1 and Test Examples 2 described above show that with a photocatalytic material having Fab' fragments each linked via the S of the mercapto group to the maleimido group of a bridging molecule (see FIG. 1), as a result of substantially all of the holding substance (Fab' fragments) disposed on the surface of the titanium dioxide being present in a form such as to be able to selectively hold a specific harmful substance (here, M13 phage or E. coli) at the antigen binding sites (holding parts) thereof, the harmful substance can be adsorbed (held) more efficiently, and hence more of the harmful substance can be inactivated by photocatalysis. On the other hand, with an IgG-containing photocatalytic material characterized in that an aldehyde group of each bridging molecule is linked to one of the amino groups present in the IgG, the bridging molecules and the IgG may be linked together via an amino group present at an antigen binding site or in the vicinity of an antigen binding site. The state of orientation of the IgG disposed on the surface of the photocatalyst will thus not be uniform. With the IgG having such a form of bonding, the ability to selectively bind to the targeted harmful substance will be impaired. Moreover, IgG existing with such a form of bonding may impair the antibody activity (antigen binding ability) of the surrounding IgG (i.e. cause steric hindrance).

As described above, with the photocatalytic material of the present invention, an antibody (preferably Fab' fragments) against a harmful substance such as an organism, for example a biologically hazardous virus or a pathogenic bacterium, or a toxin is bonded to the surface of a photocatalyst such as titanium dioxide. Consequently, by, for example, mixing the photocatalytic material with blood and irradiating with light, a harmful substance contained in the blood can be selectively and efficiently inactivated and removed, without strongly denaturing useful blood components. Moreover, by dispersing a powdered photocatalytic material in a plasma component that has been introduced into a circuit outside the body, and then irradiating the photocatalytic material with light, a harmful substance contained in the plasma can be selectively inactivated and removed, without strongly denaturing the useful plasma component.

Furthermore, as in the examples described earlier, by manufacturing Fab' fragments having SH groups from a whole antibody such as anti-M13 phage mouse IgG or anti-E. coli rabbit IgG, and bonding the SH groups of the Fab' fragments to the maleimido groups of bridging molecules (see FIG. 5), the Fab' fragments can easily be disposed on the surface of the titanium dioxide in a fixed state. Moreover, essentially all of the Fab' fragments disposed on the surface of the titanium dioxide can be disposed on the surface of the titanium dioxide maintained in a similar three-dimensional form. Note that there is no limitation to Fab' fragments, but rather another antibody fragment or holding substance other than an antibody having at prescribed site(s) thereof one or a limited number of (approximately two or three) SH group(s) that will bond selectively to the terminal maleimido groups of the bridging molecules can be similarly used.

Moreover, titanium dioxide was used as the photocatalytic material, but any transition metal oxide that exhibits strong oxidizing power upon irradiation with light can be used. Moreover, there is no limitation to using 3-aminopropyltriethoxysilane and EMCS for the bridging molecules, but rather the bridging molecules may have any constitution enabling the holding substance to be linked to the surface of the photocatalyst.

For example, as shown in FIG. 10, the bridging molecules 24 may be constituted from Protein G (reference numeral 35 in FIG. 10), which has a characteristic of bonding specifically to a site of an antibody 26 on the opposite side to the antigen binding sites 17 (i.e. the Fc part), 3-aminopropyltriethoxysilane, and glutaraldehyde (FIG. 10). Moreover, Protein A or the like may be used instead of Protein G.

In the examples described earlier, the photocatalytic material is manufactured using powdered titanium dioxide, and is dispersed (filled) into the treatment chamber 19 of the treatment apparatus 11; the efficiency of treatment of the fluid 14 to be treated is thus high.

Moreover, in the case that a plurality of types of harmful substance 16 are present in the fluid 14 to be treated, a plurality of types of holding substance corresponding respectively to the harmful substances may be held on the photocatalyst 23. Alternatively, it is possible to connect a plurality of the vessels 12 shown in FIG. 2 together in series such that the fluid 14 can flow through the vessels 12 in order, house a photocatalytic material (powder etc.) 21 having a holding substance 26 corresponding to a different one of the specific harmful substances 16 in each of the vessels 12, and subject the fluid 14 to photocatalytic treatment in the vessels 12 in order.

Furthermore, there is no limitation to continuous treatment in which irradiation with light is carried out while making the fluid 14 come into contact with the photocatalytic material 21, thus inactivating the held harmful substance 16. For example, first, without carrying out irradiation with light, treatment may be carried out in which the fluid 14 is made to come into contact with the photocatalytic material 21, thus holding the harmful substance 16 on the holding substance 26. Next, after the contact between the fluid 14 and the photocatalytic material 21 has been completed (i.e. the photocatalytic material 21 has been separated from the fluid 14 and recovered using a suitable filter or the like), treatment may be carried out in which the photocatalytic material 21 is irradiated with light to inactivate the harmful substance 16 that has been held (captured) by the holding substance. With this step-like approach, denaturation of useful components in the fluid by the photocatalysis can be reliably prevented, and moreover parts (fragments) of the harmful substance decomposed by the photocatalysis can be reliably prevented from remaining behind in the fluid.

Moreover, with the photocatalytic material 21 in the above example, the holding substance 26 was bonded to powdered titanium dioxide 23, but the photocatalytic material may instead have a form in which a photocatalyst film made of titanium dioxide or the like is formed on the surface of a substrate, not shown in the drawings, such as glass beads, and the holding substance 26 is bonded to the surface of the film. The form of the substrate may be determined in accordance with the usage.

Furthermore, the holding substance 26 may be bonded to only some of the bridging molecules 24 arranged on the surface of the photocatalyst, or different holding substances 26 may be bonded to different ones of the bridging molecules 24.

Moreover, it is preferable to form the bridging molecules and the holding substance densely on the surface of the photocatalyst (or the photocatalyst film on the surface of the substrate). As a result, a structure is produced in which the constituent components of the fluid 14 do not readily come into contact with the photocatalyst, and hence denaturation of these constituent components by the photocatalysis can be suppressed.

Moreover, the photocatalytic treatment apparatus provided by the present invention is not limited to having a constitution in which a powdered photocatalytic material 21 is filled into a vessel (flow path) 12 as shown in FIG. 2.

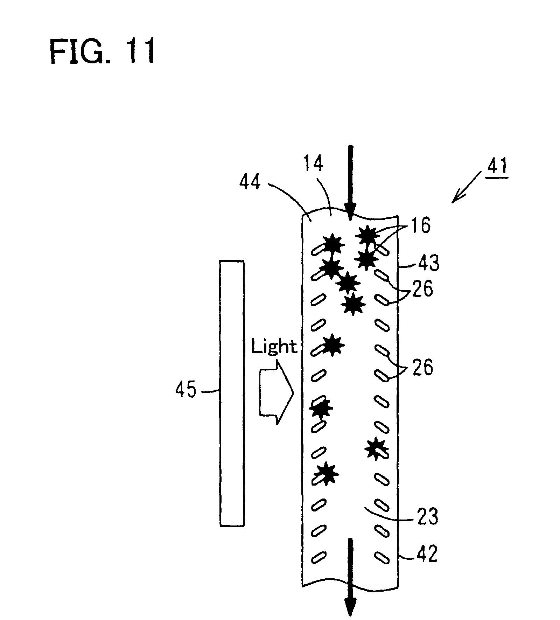

For example, with a treatment apparatus 41 shown in FIG. 11, a film of titanium dioxide is formed on the inner peripheral surface of a vessel (which corresponds to the substrate) 42 formed into a tubular shape from a material having high optical transparency, and the holding substance 26 is bonded to the surface of the titanium dioxide via the bridging molecules 24. That is, a photocatalytic function and a harmful substance 16 selective holding ability are given to the inner peripheral surface of the vessel 42. In other words, the treatment apparatus 41 has a substrate 43 formed into an approximately tubular shape from a transparent material, and a photocatalyst 23 made of titanium dioxide or the like is formed as a layer over approximately the whole of the inner surface of the substrate 43.

By bonding the holding substance 26 to the surface of the photocatalyst 23 via the bridging molecules 24, a tubular photocatalytic material (i.e. a material for treating the harmful substance 16) 44 is then formed. With the present treatment apparatus 41, preferably, a light source 45 that shines light approximately lengthways along the axial direction of the tubular photocatalytic material 44 is provided, and the fluid 14 is passed through the treatment apparatus 41 and thus treated.

With the treatment apparatus 41 shown in FIG. 11, like the treatment apparatus 11 shown in FIG. 2, the fluid 14 is thus passed through the vessel 42 continuously, whereby a harmful substance 16 contaminating the fluid 14 can be inactivated. For example, it is easy to subject a fluid (blood) 14 to be treated to circulation outside the body as with dialysis, whereby a harmful substance 16 in the blood can be selectively inactivated while suppressing denaturation of the blood components.

Moreover, a step of separating the photocatalytic material out from the fluid 14 after the treatment is unnecessary, with it being possible to discharge from the vessel 42 and recover only the fluid 14. Furthermore, because the vessel 42 itself is the photocatalytic material 44, it is possible to construct an apparatus of relatively simple constitution with few constituent parts. Moreover, it is easy to make the apparatus small and light.

Note that with the treatment apparatus 41 shown in FIG. 11, it is possible to form the substrate 43 in a spiral shape around the light source 45, or form the substrate 43 in a plane bent into a bellows shape, whereby the distance through which the fluid 14 flows through the region irradiated by the light from the light source 45 can be lengthened, and hence the photocatalytic treatment ability can be improved.

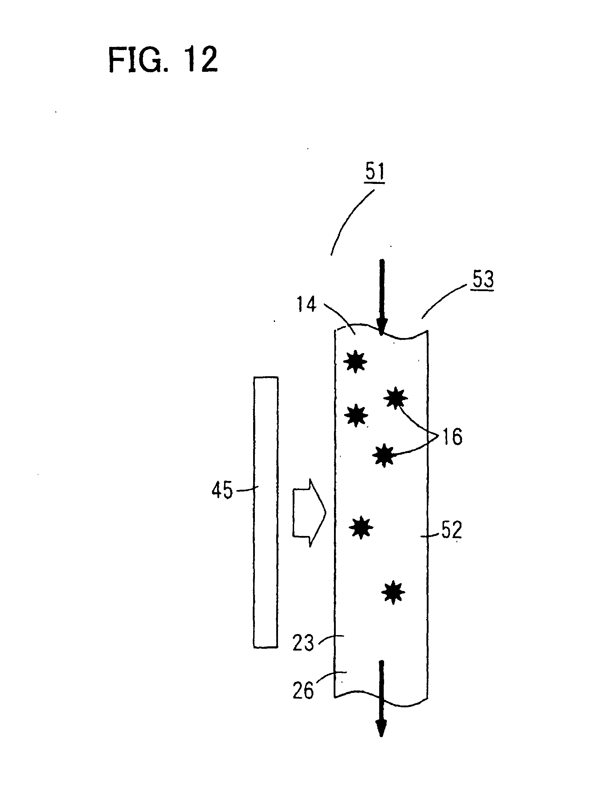

Moreover, a treatment apparatus 51 shown in FIG. 12 has an optically transparent substrate 52 that is typically a circular or square solid cylinder in shape and is formed from a porous member having a plurality of through holes through which the fluid 14 can pass. A peripheral surface (side surface) of the substrate 52 has a dense structure (i.e. with no opening parts such as holes) such that the fluid 14 will not pass therethrough. Moreover, regarding the substrate 52, for example a plurality of ceramic particles may be provided integrally on the surface of a ceramic porous body having a three-dimensional network structure, whereby undulations are formed on the surface.

A film of a photocatalyst 23 such as titanium dioxide is then formed so as to cover the surface of the porous substrate 52 (in the case that a plurality of ceramic particles are provided integrally on the surface of a ceramic porous body having a three-dimensional network structure as described above, the surfaces of the ceramic porous body and the ceramic particles). The holding substance 26 is then bonded to the surface of the photocatalyst film 23 via the bridging molecules 24, whereby a porous photocatalytic material 53 is formed.

With the present treatment apparatus 51, the porous photocatalytic material 53 is filled into a suitable casing, and a fluid 14 is made to flow through the holes in the porous photocatalytic material 53. That is, the fluid 14 weaves its way through the holes (voids) in the porous photocatalytic material 53 in non-linear fashion. In other words, turbulent flow with, for example, changes in the direction of flow or contraction flow of the fluid 14 frequently occurs in the holes (voids) in the porous photocatalytic material 53. As a result, the efficiency of contact between a harmful substance 16 contaminating the fluid 14 and the holding substance 26 of the photocatalytic material 53 is improved. Consequently, with the porous photocatalytic material 53 of the present constitution, the holding of the harmful substance 16 by the holding substance 26 can be carried out efficiently. The harmful substance 16 held by the holding substance 26 can then be inactivated efficiently by the photocatalyst film made of titanium dioxide or the like present on the surfaces of the porous photocatalytic material 53 (the internal walls of the holes).

According to the treatment apparatus 51 shown in FIG. 13, the efficiency of contact between the fluid 14 and the holding substance 26 can thus be improved, and hence the treatment efficiency of the inactivation of the harmful substance 16 can be improved. Moreover, as with the treatment apparatus 41 shown in FIG. 11, a step of separating the photocatalytic material out from the fluid 14 is unnecessary, and hence it is easy to discharge and recover the fluid 14 only.

Concrete examples of the present invention have been described in detail above, but these are merely illustrative, and do not restrict the scope of the claims of the present invention. Any of various modifications or changes to the concrete examples given above are deemed to be included in the art described in the claims.

Moreover, the technical elements described in the present specification and drawings exhibit technical usefulness either alone or in any of various combinations, and there is no limitation to the combination described in the claims at the time of filing. Moreover, the art illustrated in the present specification and drawings attains a plurality of objects simultaneously, but there is technical usefulness in attaining one of these objects.

## Claims

1. A photocatalytic material used to selectively inactivate a specific biologically harmful substance that may be contained in a liquid or gas to be treated, the material comprising:
a photocatalyst; and
a holding substance having a holding part that specifically holds a specific biologically harmful substance, the holding substance being disposed in a state fixed to at least a part of a surface of the photocatalyst;
wherein the photocatalytic material is designed such that substantially all of the holding substance is disposed on the surface of the photocatalyst in a form such as to be able to specifically hold a specific biologically harmful substance in the holding part.

2. The photocatalytic material according to claim 1, further comprising bridging molecules that link the holding substance to the photocatalyst, wherein sites of the holding substance able to chemically bond to a specific site of each of the bridging molecules designed to link to the holding substance are limited to one location or a few locations such that substantially all of the holding substance disposed on the surface of the photocatalyst can adopt a similar three-dimensional form.

3. The photocatalytic material according to claim 2, wherein the holding substance is an immunoglobulin or a fragment thereof

4. The photocatalytic material according to claim 1, further comprising a substrate having a prescribed form, wherein the photocatalyst is formed on a surface of the substrate.

5. The photocatalytic material according to claim 4, wherein the substrate is a powder that can be dispersed in a liquid.

6. A method of manufacturing a photocatalytic material used in selectively inactivating a specific biologically harmful substance that may be contained in a liquid or gas to be treated, the method comprising the steps of:
preparing a photocatalyst that is able to inactivate the harmful substance through photocatalysis;
disposing bridging molecules on a surface of the photocatalyst; and
bonding a holding substance having a holding part that is able to specifically hold a specific harmful substance to each of the bridging molecules disposed on the surface of the photocatalyst, this being a step of bonding the holding substance to the bridging molecules such that substantially all of the holding substance bonded to the bridging molecules comes to be in a form such as to be able to specifically hold a specific biologically harmful substance in the holding part.

7. The method according to claim 6, wherein molecules each having a specific site designed to be linked to the holding substance are used as the bridging molecules, and a substance, for which sites able to chemically bond to the specific site of each of the bridging molecules are limited to one location or a few locations such that substantially all of the holding substance chemically bonded to the bridging molecules and disposed on the surface of the photocatalyst adopts a similar three-dimensional form, is used as the holding substance.

8. The method according to claim 7, wherein an immunoglobulin or a fragment thereof is used as the holding substance.

9. The method according to claim 8, wherein one or a plurality of Fc receptors is/are used as the bridging molecules.

10. The method according to claim 7, wherein an Fab' fragment of an immunoglobulin is used as the holding substance, and the bridging molecules and the Fab' fragment are bonded together via the sulfur atom in a mercapto group of the Fab' fragment.

11. An apparatus that treats, by photocatalysis, a specific biologically harmful substance contained in a liquid or gas to be treated, the apparatus comprising:
the photocatalytic material according to claim 1; and
a light source that irradiates light capable of bringing about a photocatalytic reaction onto the photocatalytic material.

12. The apparatus according to claim 11, wherein the photocatalytic material is formed as a powder, the apparatus further comprises a flow path that contains the powdered photocatalytic material and through which a fluid containing the harmful substance is fed, and the light source is provided so as to be able to irradiate light onto the powdered photocatalytic material present in the flow path.

13. The apparatus according to claim 12, further comprising separating means for separating the powdered photocatalytic material out from the fluid flowing through the flow path.
